# EUROPÄISCHE PATENTANMELDUNG

(11) **EP 2 452 815 A1**
(43) Veröffentlichungstag der Anmeldung: **16.05.2012**
(21) Anmeldenummer: 10190509.9
(22) Anmeldetag: 09.11.2010
(51) Int. Cl.: B32B 3/14, B32B 21/00, B44C 1/26, E04F 13/10, E04F 15/04

(54) **Holzwerkstoffplatte mit dekorativen Elementen**

(71) Anmelder: Falquon GmbH, 16928 Pritzwalk (DE)
(72) Erfinder:
(74) Vertreter: Morawski, Birgit

(57) **Zusammenfassung**

Die vorliegende Erfindung betrifft eine Holzwerkstoffplatte (1) mit einer Oberseite und einer Unterseite, wobei in die Oberseite der Holzwerkstoffplatte (1) mindestens ein Element (2) eingefügt ist, wobei das mindestens eine Element (2) eine strukturierte Oberfläche aufweist, mit einem mindestens einer Dekorschicht und/oder mit einem technischen Mittel (5) versehen ist. Die vorliegende Erfindung betrifft ebenfalls die Verwendung der Holzwerkstoffplatte und ein Verfahren zu deren Herstellung.

## Beschreibung

Die vorliegende Erfindung betrifft einer Holzwerkstoffplatte nach dem Oberbegriff des Anspruchs 1, deren Verwendung nach Anspruch 13 und ein Verfahren zu deren Herstellung nach Anspruch 14.

Zur optischen Aufwertung von Fußbodenbelägen, wie z.B. Laminatfußböden, wurden in der Vergangenheit eine Vielzahl von Ansätzen gewählt. So wird auf die Oberfläche der Fußbodenbeläge üblicherweise ein entsprechendes Dekor in Kombination mit einer dazu passenden Struktur aufgetragen. Ein solcher Ansatz ist entweder auf eine einzelne Fußbodendiele beschränkt oder kann auch über mehrere Dielen, z.B. in Form von Bildern, verwirklicht werden.

So wird in der NL 1029769 ein Verfahren zur Herstellung von Platten mit Inlays beschrieben, wobei die verwendeten Inlays aus Metalleinsätzen bestehen. Die so hergestellten dekorativen Designs erstrecken sich dabei über eine Vielzahl von einzelnen Panelen beziehungsweise Platten, die erst nach Zusammenfügen das gewünschte Dekor aufzeigen. Weitere Verfahren und Gestaltungsformen sind zum Beispiel aus der US 7,491,437 B1 und der US 2005/0006019 A1 bekannt. Hier werden komplex strukturierte Dekorelemente in Oberflächen von Werkstoffplatten integriert.

Eine andere Möglichkeit besteht in der Anordnung von dekorativen Auflockerungen zum Beispiel in Form von Kunststoffleisten oder anderen Materialien zwischen den einzelnen Dielen.

Ein weiterer Ansatz besteht darin, im Randbereich der Dielen gezielt Fugen zu erzeugen, die anschließend mit verschieden eingefärbten Lacken versehen werden. Damit können zum Beispiel bei Fliesendekoren Zementfugen nachgeahmt werden.

Auch können durch das Einfügen von Kunststoff- oder Metallleisten in Dielen oder Laminatfu βböden dekorative Auswertungen des Fuβbodenbelages erreicht werden. Diese Materialien werden üblicherweise in Nuten eingeklebt, die vorher in den Fußbodenbelag eingefräst worden sind. Nachteilig ist bei diesen Ansätzen jedoch, dass das Einfügen von Dekorelementen auf die Ränder oder einen durchgehenden Bereich des Fuβbodenbelages beschränkt ist.

Aus den bisher bekannten Ansätzen ergibt sich jedoch eine Vielzahl von Nachteilen. So ist eine Kombination oder eine Ergänzung des bereits vorhandenen Dekores mittels weiterer Dekore nur begrenzt möglich. In der Regel ist die Verwendung von Dekoren auf die Ränder oder einen durchgehenden Bereich des Fußbodenbelages beschränkt. Schließlich ist die Geometrie des dekorativen Materiales mehr oder weniger identisch, z.B. Streifenförmig. Somit sind die gestalterischen Möglichkeiten bei der Entwicklung neuer Designs insbesondere bei Laminatfußböden erheblich eingeschränkt.

Der vorliegenden Erfindung liegt daher die Aufgabe zu Grunde, eine Werkstoffplatte und ein Verfahren bereitzustellen, wobei in einen Fußbodenbelag, insbesondere einen Laminatfußboden, dekorative Elemente mit beliebigem Geometrien und Funktionen eingearbeitet werden.

Diese Aufgabe wird erfindungsgemäß durch eine Holzwerkstoffplatte mit den Merkmalen des Anspruchs 1 gelöst.

Die erfindungsgemäße Holzwerkstoffplatte weist demnach eine Oberseite und eine Unterseite auf, wobei in die Oberseite der Holzwerkstoffplatte mindestens ein Element eingefügt ist, und wobei das mindestens eine Element eine strukturierte Oberfläche aufweist, mit einem mindestens einer Dekorschicht und/oder mit mindestens einem technischen Mittel versehen ist.

Die zum Einsatz kommenden Elemente können dabei beliebige Geometrien aufweisen, wobei einfache kreisförmige, tropfenförmige oder halbmondförmige Geometrien bevorzugt sind.

In einer Ausführungsform weist die strukturierte Oberfläche des mindestens einen Elementes regelmäßige und/oder unregelmäßige Vertiefungen und/oder Erhöhungen auf. Durch die Strukturierung wird der Werkstoffplatte eine rutschhemmende Funktion verliehen (Antirutscheffekt), so dass Sicherheitsbestimmungen in spezifischen Arbeitsbereichen wie z.B. Läden eingehalten werden können.

Im Sinne der vorliegenden Anmeldung ist unter einer strukturierten Oberfläche des mindestens einen Elementes auch eine Oberfläche zu verstehen, die mit der Oberfläche bzw. Oberseite der Holzwerkstoffplatte nicht in einer Ebene abschließt, sondern vielmehr einen dreidimensionalen Effekt aufweist. So kann die Oberfläche des mindestens einen Elementes gewölbt, insbesondere halbrund gewölbt sein. In solch einem Fall steht das Element also aus der Oberseite der Werkstoffplatte in Form einer Halbkugel hervor.

Eine derartige Ausbildung des mindestens einen Elementes ist selbstverständlich nicht auf Halbkugeln beschränkt, sondern kann jede andere geometrische Form z.B. zylindrisch, rechteckig, prismatisch, dreieckig und andere umfassen. Wesentlich ist, dass die Oberfläche des mindestens einen Elementes dreidimensional ausgebildet ist.

In eine weiteren Ausführungsform weist die mindestens eine Dekorschicht des mindestens einen Elementes abriebfeste Partikel, natürliche oder synthetische Fasern und/oder mindestens ein Additiv, insbesondere leitfähige Substanzen, Flammschutzmittel, luminiszierende Stoffe und Metalle auf. Dies ermöglicht insbesondere bei Verwendung von luminiszierenden Stoffen oder Pigmenten den Einsatz der Holzwerkstoffplatte als Notbeleuchtung und/oder Hinweisgeber für Fluchtwege.

Als leitfähige Substanzen können Substanzen aus der Gruppe enthaltend Russ, Kohlefasern und Nanopartikel, insbesondere Kohlenstoffnanoröhren verwendet werden. Das Flammschutzmittel kann ausgewählt sein aus der Gruppe enthaltend Phosphate, Borate, insbesondere Ammoniumpolyphosphat, Tris(tri-bromneopentyl)phosphat, Zinkborat oder Borsäurekomplexe von mehrwertigen Alkoholen. Der luminiszierende Stoff ist bevorzugt ausgewählt aus der Gruppe enthaltend fluoreszierende und phosphoreszierende Stoffe, insbesondere Zinksulfid und Erdalkalialuminate. Die abriebfesten Partikel sind bevorzugt ausgewählt aus der Gruppe enthaltend Aluminiumoxide, Korund, Borcarbide, Siliziumdioxide, Siliziumcarbide und Glaskugeln. Die natürlichen oder synthetischen Fasern sind bevorzugt ausgewählt aus der Gruppe enthaltend Holzfasern, Zellulosefasern, Wollfasern, Hanffasern und organische oder anorganische Polymerfasern.

Selbstverständlich ist es auch möglich, dass die gesamte Oberfläche der Holzwerkstoffplatte und nicht nur die Oberfläche der eingefügten Elemente mit einer Oberflächenschicht versehen ist, die die genannten Komponenten aufweist.

Auch ist es möglich, die Dekorschicht mit Motiven wie z.B Firmenlogos zu gestalten. Zur Gestaltung der Dekorschicht werden bevorzugt solche Motive verwendet, die in Kombination mit einer geeigneten Lichttechnik und unter Verwendung von geeigneten Farbstoffen an Wänden oder Decken gespiegelt werden.

In einer weiteren bevorzugten Ausführungsform umfasst das mindestens eine technische Mittel einen Sensors, der insbesondere zur Steuerung von Licht, Alarm oder Sicherheitstechnik dient. Die verwendeten Sensoren sind bevorzugt druckempfindliche Sensoren, die auf mechanische Belastung z.B. bei Auftreten einer Person im Falle der Verwendung der Holzwerkstoffplatte in einem Fußbodenbelag oder durch händisches Berühren von Personen im Falle der Verwendung der Holzwerkstoffplatte als Teil einer Wandverkleidung reagieren, d.h. dass bei mechanischer Belastung des Sensors ein Signal vom Sensor z.B. zur Steuerung einer Lichtschaltung oder Beobachtungskamera ausgesendet wird.

Die Stromversorgung des Sensors erfolgt bevorzugt mittels Batterien. Die Größe der verwendeten Batterien ist ähnlich zu den Dimensionen von in Armbanduhren oder Fernbedienungen verwendeten Batterien. Es ist aber auch möglich, die Stromversorgung durch eine elektrische Leitung zu gewährleisten, wobei hierzu die Werkstoffplatte bzw. Diele durchbohrt wird, wie es z.B. im Falle von Fußbodenbeleuchtungssystemen der Fall ist.

Die Dicke des mindestens einen Elementes kann zwischen 0,5 und 10 mm, bevorzugt zwischen 1 und 8 mm, insbesondere zwischen 1 bis 5 mm liegen. So sollte die Dicke des Elementes bei dünneren Laminatböden mit einer Dicke von 6 mm nicht mehr als 1 mm betragen. Bei dickeren Laminatböden mit Dicken bis zu 12 mm kann die Dicke der einzufügenden Elemente durchaus bei bis zu 4 mm liegen. Die Elemente sind somit in ihren Schichtdicken an die Holzwerkstoffplatte angepasst.

In einer weiteren Ausführungsform ist die Oberfläche des mindestens einen Elementes mit einer Schutzschicht gegen mechanische Beschädigung oder Verschmutzung versehen ist. Diese Schutzschicht besteht bevorzugt aus einer Lackschicht z.B. aus Acrylatlacken.

Bevorzugt besteht das mindestens eine Element aus Metall, Kunststoff, Glas und/oder Holz, wobei die Verwendung von Holz aufgrund seiner günstigen Verarbeitbarkeit besonders bevorzugt ist.

Das mindestens eine Element ist bevorzugt in mindestens eine auf der Oberseite der Holzwerkstoffplatte vorhandene Ausnehmung, insbesondere in Form einer Einfräsung, eingefügt. Dabei ist das mindestens eine Element in einer Ausführungsform in oder an der mindestens einen Holzwerkstoffplatte, insbesondere in der mindestens einen Ausnehmung durch mindestens einen Klebstoff befestigt, wobei als Klebstoff mindestens ein Schmelzklebstoff und/oder Haftklebstoff verwendet werden kann.

Die Haftklebstoffe basieren auf dauerhaft klebrigen und permanent klebfähigen organischen Produkten. Im Wesentlichen bestehen die Haftklebstoffe aus einem Basispolymer als kohäsionsbestimmende Komponente und klebrigen Harzen und Weichmachern als adhäsionsbestimmende Bestandteile. Typischerweise werden als Basispolymere u.a. Synthese- und Naturkautschuk, Butylkautschuk, Styrol-Butadien-Copolymere, Ethylen-Vinylacetat-Copolymere, Acrylnitril-Copolymere, Polychloropren, Polyisobutylen, Polyvinylether, SBS- und SIS-Blockpolymere, Acrylaten, Polyester, Polyurethane, Polyacrylaten oder Polysiloxanen verwendet.

Der Vorteil in der Verwendung von Haftklebstoffen zur Einbringung des mindestens einen Elementes in die mindestens eine Ausnehmung in der Trägerplatte besteht darin, dass die Haftklebstoffe auf verschiedensten Substraten und Oberflächen haften und sich rückstandsfrei wieder entfernen lassen, ohne dass dabei ihr Haftvermögen für eine erneute Beklebung geändert wird. Somit wird ein nachträglicher Austausch der eingefügten Elemente ermöglicht, so dass auf Veränderungen bei Produkten oder im Umfeld reagiert werden kann. Trägt die Scheibe beispielsweise als dekorative Beschichtung ein Firmenlogo, kann diese bei sich ergebenden Änderungen leicht ausgetauscht werden, ohne dass die als Bodenplatte verwendete Holzwerkstoffplatte insgesamt ausgewechselt werden muss.

Schmelzklebstoffe sind physikalisch abbindende Klebstoffe, die bei Raumtemperatur in Form von einer Komponente vorliegen. Sie werden typischerweise der Gruppe der Thermoplaste zugeordnet. Die in den Schmelzklebstoffen verwendeten Grundstoffe sind Polymerisate und Copolymerisate wie z.B. Ethylen-Vinylacetat, thermoplastische Elastomere oder Polybutene, Polyaddukte wie z.B. thermoplastische Polyurethane und Polykondensate wie z.B. PolyamidHarze, Polyamid/EVA-Copolymere oder Polyetheramide. Die Menge und Viskosität der im Zusammenhang mit der vorliegenden Erfindung verwendeten Schmelzklebstoffe ist bevorzugt so gewählt, dass ein Herausquellen des Klebstoffes bei Einfügen des Elementes in die Ausnehmung vermieden wird.

In einer weiteren Ausführungsform umfasst die Holzwerkstoffplatte mindestens eine Trägerplatte, mindestens eine Oberflächenschicht, mindestens eine Dekorschicht, mindestens eine Gegenzugbeschichtung und/oder mindestens eine schalldämmende Schicht. Dabei kann die Trägerplatte aus einem Holzwerkstoff oder aus Kunststoff oder einem Holzwerkstoff-Kunststoff-Gemisch bestehen, und insbesondere eine Span-, mitteldichte Faser(MDF)-, hochdichte Faser (HDF)- oder Grobspan (OSB)- oder Sperrholzplatten, eine Zementfaserplatte und/oder Gipsfaserplatte sein.

Die erfindungsgemäße Holzwerkstoffplatte kann als ein dekoratives Panel, insbesondere als ein dekoratives Fuβbodenpanel oder als dekoratives Wandpanel, verwendet werden. Dabei kann die mit dem Element versehene Holzwerkstoffplatte mit einer nicht-modifizierten Holzwerkstoffplatte, d.h. ohne Element verbunden werden. Somit ist es nunmehr möglich einen Laminatfußboden in beliebiger Weise mit unterschiedlichen Dekoren herzustellen. So kann der Laminatfußboden z.B. zu 80% aus unmodifizierten, normalen Holzwerkstoff- bzw. Laminatplatten und zu 20% aus mit Dekoren bzw. Elementen versehen Holzwerkstoff- bzw. Laminatplatten bestehen. Der Zusammensetzung des Laminatfußbodens sind dabei keine Grenzen gesetzt.

In einer bevorzugten Ausführungsform wird das mindestens eine Muster unter Verwendung einer Bilderkennungssoftware, insbesondere mittels einer Fräse, ausgeschnitten. Eine hierfür geeignete Fräse ist z.B. eine Oberfräse der Firma Homag Modell Vantage 12L unter Verwendung der Software woodWoP.

Die Einfräsung und das Einsetzen der dekorativen Elemente können bereits wie beschrieben bei einzelnen beschichteten Platten erfolgen. Eine andere Möglichkeit ist, die Elemente erst nach der Fertigbearbeitung der Dielen in diese einzuführen. In beiden Fällen kann die exakte Positionierung der Einfräsungen durch Bilderkennungssysteme vorgegeben werden. Die Geometrie der einzulegenden Teile in Bezug auf die Radien wird dabei nur durch das Werkzeug der verwendeten Oberfräse begrenzt.

Die erfindungsgemäße Holzwerkstoffplatte wird in einem Verfahren mit den im Folgenden beschriebenen Schritten hergestellt.

Zunächst wird auf der Oberseite von mindestens einer Werkstoffplatte mindestens ein Muster aufgetragen bzw. die Oberseite mit diesem Muster gekennzeichnet, wobei das mindestens eine Muster zu der Geometrie von mindestens einem in die Werkstoffplatte einzufügenden Element korrespondiert.

In einem zweiten Schritt wird das mindestens eine gekennzeichnete Musters aus der mindestens einen Werkstoffplatte herausgeschnitten, wobei eine Ausnehmung in der Werkstoffplatte mit der Geometrie des mindestens einen einzufügenden Elementes erhalten wird. Die Tiefe der Ausnehmung ist dabei größer als die Dicke des einzufügenden Elementes, jedoch naturgemäß geringer als die Dicke der Holzwerkstoffplatte. Bevorzugt weist die Ausnehmung eine Tiefe zwischen 1 bis 10 mm, insbesondere zwischen 2 bis 8 mm auf.

Anschließend wird der mindestens eine Klebstoff in die mindestens eine Ausnehmung eingebracht. Die Menge des einzubringenden Klebstoffes wird durch die Abmaße der Ausnehmung und des einzufügenden Elementes bestimmt. Bevorzugt wird soviel Klebstoff eingebracht, so dass der Klebstoff bei Einbringen des Elementes an den Seiten nach oben zur Oberseite der Werkstoffplatte gedrückt wird, jedoch nicht aus der Ausnehmung überfließt, sondern bevorzugt mit dem Element an der Oberseite abschließt, so dass keine Ritze oder Fuge zwischen dem eingefügten Element und der Holzwerkstoffplatte besteht. Die verwendeten Klebstoffmengen liegen bevorzugt zwischen 110 bis 250 g/m², insbesondere zwischen 150 bis 200 g/m². Der Klebstoff kann auch in Form eines Klebebandes in die Ausnehmung eingeführt werden.

Nach Einbringen des Klebstoffes wird das mindestens Element in die mindestens eine Ausnehmung eingeführt und anschließend der mindestens eine Klebstoff zur Befestigung des mindestens einen Elementes in der mindestens einen Ausnehmung ausgehärtet. Die Aushärtung des verwendeten Haftklebstoffes und/oder Schmelzklebstoffes erfolgt bevorzugt durch Abkühlen und/oder Nachvernetzen.

Die erfindungsgemäße Holzwerkstoffplatte und die zu deren Herstellung verwendete Technologie ermöglicht somit das Integrieren von Elementen, insbesondere scheibenförmigen Elementen mit beliebigen Geometrien in den Fußbodenbelag. Dabei können die Elemente mit einem bereits vorhandenen Dekor kombiniert werden. Durch eine geeignete Materialauswahl für die verwendeten Elemente können gezielt Aufwertungen im Hinblick auf das Produkt vorgenommen werden. Wesentlich ist, dass durch die Verwendung einer geeigneten Form für die Elemente weitere technische Gestaltungsmöglichkeiten beziehungsweise funktionelle Elemente integriert werden können, die beispielsweise sicherheitstechnische Aspekte berücksichtigen. Die in die Holzwerkstoffplatte eingefügten Elemente können in beliebigen Ausmaß und beliebiger Kombination mit anderen Gestaltungsmerkmalen variiert werden. Auch können die Dekorelemente in jeder einzelnen Holzwerkstoffplatte, Laminatplatte oder Diele vorhanden sein bzw. nur zu einem bestimmten Prozentsatz in einem Fußbodenbelag in einem Raum verlegt werden. Dabei ist auch ein gezieltes Positionieren der mit den dekorativen Elementen versehenen Platten beziehungsweise Dielen im Fußbodenbereich, zum Beispiel im Rand- oder Mittelbereich möglich. Hierdurch kann gezielt ein Muster im Fußbodenbelag erzeugt werden.

Die Erfindung wird nachfolgend unter Bezugnahme auf die Figuren der Zeichnungen an einem Ausführungsbeispiel näher erläutert. Es zeigen:
- Figur 1: eine Draufsicht auf eine Holzwerkstoffplatte gemäß einer ersten Ausführungsform;
- Figur 2: eine Querschnittsansicht einer Holzwerkstoffplatte gemäß einer zweiten Ausführungsform;
- Figur 3: eine Querschnittsansicht einer Holzwerkstoffplatte gemäß einer dritten Ausführungsform;
- Figur 4: eine Querschnittsansicht einer Holzwerkstoffplatte gemäß einer vierten Ausführungsform; und
- Figur 5: eine Querschnittsansicht einer Holzwerkstoffplatte gemäß einer fünften Ausführungsform

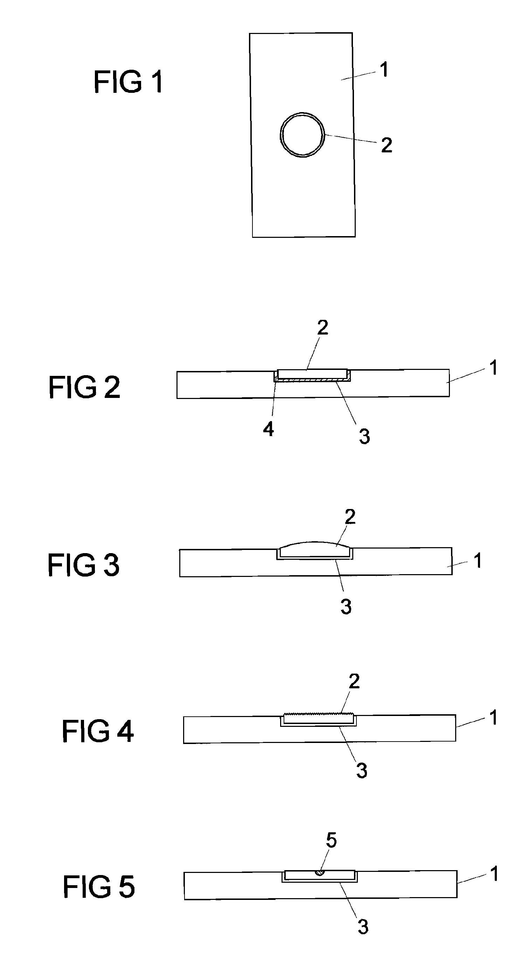

Figur 1 zeigt die Draufsicht auf eine Holzwerkstoffplatte 1, in deren Oberfläche beziehungsweise Oberseite ein kreisförmiges Dekorelement 2 eingefügt ist. Im vorliegenden Fall ist das kreisförmige Dekorelement 2 in die Mitte der Holzwerkstoffplatte 1 eingefügt. Es ist aber auch generell möglich, dass Dekorelement 2 an anderen Positionen in die Werkstoffplatten, z.B. entlang der Diagonalen oder nahe den Seitenrändern der Werkstoffplatten einzuführen. Auch ist es vorstellbar, mehr als ein Element in die Werkstoffplatten einzufügen, wobei die Elemente unterschiedlicher Dekore, Strukturen oder technische Funktionen aufweisen können. So ist es vorstellbar, neben einem Dekorelement ebenfalls ein Element enthaltend einen Sensor in einer Holzwerkstoffplatte einzubauen.
Figur 2 zeigt eine zweite Ausführungsform der erfindungsgemäßen Werkstoffplatte, wobei das Element 2 in die Ausnehmung 3 eingeführt wurde. Zwischen den Seitenrändern und der Unterseite des Elementes 2 und den Seitenrändern und der nach oben offenen Fläche der Ausnehmung 3 befindet sich der Klebstoff 4. Es wurde soviel Klebstoff 4 verwendet, so dass es zum einen nicht zu einem Herausquellen beziehungsweise Auslaufen des Klebstoffes 4 auf die Oberseite der Werkstoffplatte 1 kommt. Die Menge des Klebstoffes 4 wurde so gewählt, dass keine Freiräume wie zum Beispiel offene Ritzen zwischen dem Element 2 und der Ausnehmung 3 gebildet werden. Dadurch wird ein Eindringen von Wasser oder anderen Verschmutzungen in die Verbindung zwischen Element 2 und Ausnehmung 3 verhindert, so dass es nicht zu optischen oder mechanischen Beeinträchtigungen kommen kann. Die Werkstoffplatte verfügt jeweils an ihren Stirnseiten über Mittel (nicht gezeigt), die ein Verbinden der einzelnen Werkstoffplatten miteinander ermöglicht. Diese Verbindungsmittel können in Form von Rastelementen oder Kopplungselementen ausgebildet sein und sind einem Fachmann geläufig.

In Figur 3 ist eine weitere Ausführungsform gezeigt, wobei hier das eingefügte Element 2 nicht planar mit der Oberfläche der Holzwerkstoffplatte abschließt, sondern halbrund gewölbt aus der Holzwerkstoffplatte hervorsteht. Das in Figur 4 dargestellte Element 2 weist wiederum eine strukturierte Oberfläche auf. Diese zwei Ausführungsformen ermöglichen aufgrund ihrer spezifischen Oberflächengestaltung die Bereitstellung einer Holzwerkstoffplatte mit rutschhemmenden Eigenschaften.

### Ausführungsbeispiel

Gemäß dem folgenden Beispiel ist ein Element in die Oberseite einer Holzwerkstoffplatte eingefügt, wobei in das Element ein druckempfindlicher Sensor 5 eingebaut ist (Figur 5).

Als druckempfindlicher Sensor 5 wird typischerweise ein Dehnungsmessstreifen verwendet. Dabei handelt es sich um ein dünnes Metallplättchen, welches bei mechanischer Belastung seine Geometrie und somit seinen elektrischen Widerstand verändert. Eine Variante der Dehnungsmessstreifen stellen Halbleiter-Dehnungsmessstreifen dar. Hier wird zusätzlich zu dem Geometrie-Effekt ein piezoresistiver Effekt wirksam. Halbleiter-Dehnungsmessstreifen weisen eine wesentlich höhere Empfindlichkeit gegenüber den konventionellen Dehnungsmessstreifen auf und können in kompakterer Form hergestellt werden.

Die mit dem Sensor 5 versehene Holzwerkstoffplatte ist mit weiteren Werkstoffplatten verbunden, wobei der Verbund der Platten einen Fußbodenbelag ausbildet.

Bei mechanischer Belastung des druckempfindlichen Sensors 5 z.B. bei Betreten des den Sensor aufweisenden Elementes im Fußboden wird ein Signal zur Steuerung der Raumbeleuchtung ausgesendet, welches ein Einschalten derselbigen bedingt.

In einem Ausführungsbeispiel erfolgt das Schalten der Raumbeleuchtung in Verbindung mit einer geeigneten Steuerung, z.B. in Form einer geeigneten Software, die ein Einschalten der Raumbeleuchtung zu einer bestimmten Tageszeit, z.B. bei Dunkelheit, ermöglicht.

## Patentansprüche

1. Holzwerkstoffplatte (1 ) mit einer Oberseite und einer Unterseite
**dadurch gekennzeichnet, dass**
in die Oberseite der Holzwerkstoffplatte (1) mindestens ein Element (2) eingefügt ist, wobei das mindestens eine Element (2) eine strukturierte Oberfläche aufweist, mit einem mindestens einer Dekorschicht und/oder mit einem technischen Mittel (5) versehen ist.

2. Holzwerkstoffplatte nach Anspruch 1, **dadurch gekennzeichnet, dass** die strukturierte Oberfläche des mindestens einen Elementes (2) regelmäßige und/oder unregelmäßige Vertiefungen und/oder Erhöhungen und/oder eine dreidimensionale Struktur aufweist.

3. Holzwerkstoffplatte nach Anspruch 1 oder 2, **dadurch gekennzeichnet, dass** die mindestens eine Dekorschicht des mindestens einen Elementes (2) abriebfeste Partikel, natürliche oder synthetische Fasern und/oder mindestens ein Additiv, insbesondere leitfähige Substanzen, Flammschutzmittel, luminiszierende Stoffe und Metalle, umfasst.

4. Holzwerkstoffplatte nach einem der vorhergehenden Ansprüche, **dadurch gekennzeichnet, dass** das mindestens eine technische Mittel (5) mindestens einen Sensor, insbesondere zur Steuerung von Licht, Alarm oder Sicherheitstechnik, umfasst.

5. Holzwerkstoffplatte nach einem der vorhergehenden Ansprüche, **dadurch gekennzeichnet, dass** das mindestens eine Element (2) eine Dicke von 0,5 bis 10 mm, bevorzugt von 1 bis 8 mm, insbesondere bevorzugt von 1 bis 5 mm aufweist.

6. Holzwerkstoffplatte nach einem der vorhergehenden Ansprüche, **dadurch gekennzeichnet, dass** die Oberfläche des mindestens einen Elementes (2) mit einer Schutzschicht gegen mechanische Beschädigung oder Verschmutzung versehen ist.

7. Holzwerkstoffplatte nach einem der vorhergehenden Ansprüche, **dadurch gekennzeichnet, dass** das mindestens eine Element (2) aus Metall, Kunststoff, Glas und/oder Holz besteht.

8. Holzwerkstoffplatte nach einem der vorhergehenden Ansprüche, **dadurch gekennzeichnet, dass** das mindestens eine Element (2) in mindestens eine auf der Oberseite der Holzwerkstoffplatte (1) vorhandene Ausnehmung (3), insbesondere in Form einer Einfräsung, eingefügt ist.

9. Holzwerkstoffplatte nach einem der vorhergehenden Ansprüche, **dadurch gekennzeichnet, dass** das mindestens eine Element (2) in oder auf der mindestens einen Holzwerkstoffplatte (1), insbesondere in der mindestens einen Ausnehmung (3) durch mindestens einen Klebstoff (4) befestigt ist.

10. Holzwerkstoffplatte nach Anspruch 9, **dadurch gekennzeichnet, dass** als Klebstoff (4) mindestens ein Schmelzklebstoff und/oder Haftklebstoff verwendet wird.

11. Holzwerkstoffplatte nach einem der vorhergehenden Ansprüche, **dadurch gekennzeichnet, dass** die Holzwerkstoffplatte (1) mindestens eine Trägerplatte, mindestens eine Oberflächenschicht, mindestens eine Dekorschicht, mindestens eine Gegenzugbeschichtung und/oder mindestens eine schalldämmende Schicht umfasst.

12. Holzwerkstoffplatte nach Anspruch 11, **dadurch gekennzeichnet, dass** die mindestens eine Trägerplatte aus einem Holzwerkstoff oder aus Kunststoff oder einem Holzwerkstoff-Kunststoff-Gemisch besteht, und insbesondere eine Span-, mitteldichte Faser(MDF)-, hochdichte Faser (HDF)- oder Grobspan (OSB)- oder Sperrholzplatten, eine Zementfaserplatte und/oder Gipsfaserplatte ist.

13. Verwendung einer Holzwerkstoffplatte nach einem der vorhergehenden Ansprüche als ein dekoratives Panel, insbesondere als ein dekoratives Fußbodenpanel oder als dekoratives Wandpanel.

14. Verfahren zur Herstellung einer Holzwerkstoffplatte nach einem Ansprüche 1 bis 12 umfassend die folgenden Schritte:
- Kennzeichnen von mindestens einem Muster auf der Oberseite von mindestens einer Werkstoffplatte (1), wobei das mindestens eine Muster mit der Geometrie von mindestens einem in die Werkstoffplatte (1) einzufügenden Element (2) korrespondiert,
- Ausschneiden des mindestens einen gekennzeichneten Musters aus der mindestens einen Werkstoffplatte (1), wobei eine Ausnehmung (3) in der Werkstoffplatte (1) mit der Geometrie des mindestens einen einzufügenden Elementes (2) erhalten wird,
- Einbringen von mindestens einem Klebstoff (4) in die mindestens eine Ausnehmung (3),
- Einbringen von dem mindestens einem Element (2) in die mindestens eine Ausnehmung (3), und
- Aushärten des mindestens einen Klebstoffes (4) zur Befestigung des mindestens einen Elementes (2) in der mindestens einen Ausnehmung (3).

15. Verfahren nach Anspruch 14, **dadurch gekennzeichnet, dass** das mindestens eine Muster unter Verwendung einer Bilderkennungssoftware, insbesondere mittels einer Fräse, ausgeschnitten wird.

## Geänderte Patentansprüche

### Geänderte Patentansprüche gemäss Regel 137(2) EPÜ.

**1.** Holzwerkstoffplatte (1) mit einer Oberseite und einer Unterseite
**dadurch gekennzeichnet, dass**
in die Oberseite der Holzwerkstoffplatte (1) mindestens ein Element (2) eingefügt ist, wobei das mindestens eine Element (2) mit einem mindestens einer Dekorschicht versehen ist, und wobei die mindestens eine Dekorschicht des mindestens einen Elementes (2) abriebfeste Partikel, natürliche oder synthetische Fasern und/oder mindestens ein Additiv umfasst.

**2.** Holzwerkstoffplatte nach Anspruch 1, **dadurch gekennzeichnet, dass** das mindestens eine Additiv leitfähige Substanzen, Flammschutzmittel, luminiszierende Stoffe und Metalle umfasst.

**3.** Holzwerkstoffplatte nach Anspruch 1 oder 2, **dadurch gekennzeichnet, dass** die abriebfesten Partikel ausgewählt sind aus der Gruppe enthaltend Aluminiumoxide, Korund, Borcarbide, Siliziumdioxide, Siliziumcarbide und Glaskugeln.

**4.** Holzwerkstoffplatte nach einem der vorhergehenden Ansprüche, **dadurch gekennzeichnet, dass** die natürlichen oder synthetischen Fasern ausgewählt sind aus der Gruppe enthaltend Holzfasern, Zellulosefasern, Wollfasern, Hanffasern und organische oder anorganische Polymerfasern.

**5.** Holzwerkstoffplatte nach einem der vorhergehenden Ansprüche, **dadurch gekennzeichnet, dass** das mindestens eine Element (2) eine Dicke von 0,5 bis 10 mm, bevorzugt von 1 bis 8 mm, insbesondere bevorzugt von 1 bis 5 mm aufweist.

**6.** Holzwerkstoffplatte nach einem der vorhergehenden Ansprüche, **dadurch gekennzeichnet, dass** die Oberfläche des mindestens einen Elementes (2) mit einer Schutzschicht gegen mechanische Beschädigung oder Verschmutzung versehen ist.

**7.** Holzwerkstoffplatte nach einem der vorhergehenden Ansprüche, **dadurch gekennzeichnet, dass** das mindestens eine Element (2) aus Metall, Kunststoff, Glas und/oder Holz besteht.

**8.** Holzwerkstoffplatte nach einem der vorhergehenden Ansprüche, **dadurch gekennzeichnet, dass** das mindestens eine Element (2) in mindestens eine auf der Oberseite der Holzwerkstoffplatte (1) vorhandene Ausnehmung (3), insbesondere in Form einer Einfräsung, eingefügt ist.

**9.** Holzwerkstoffplatte nach einem der vorhergehenden Ansprüche, **dadurch gekennzeichnet, dass** das mindestens eine Element (2) in oder auf der mindestens einen Holzwerkstoffplatte (1), insbesondere in der mindestens einen Ausnehmung (3) durch mindestens einen Klebstoff (4) befestigt ist.

**10.** Holzwerkstoffplatte nach Anspruch 9, **dadurch gekennzeichnet, dass** als Klebstoff (4) mindestens ein Schmelzklebstoff und/oder Haftklebstoff verwendet wird.

**11.** Holzwerkstoffplatte nach einem der vorhergehenden Ansprüche, **dadurch gekennzeichnet, dass** die Holzwerkstoffplatte (1) mindestens eine Trägerplatte, mindestens eine Oberflächenschicht, mindestens eine Dekorschicht, mindestens eine Gegenzugbeschichtung und/oder mindestens eine schalldämmende Schicht umfasst.

**12.** Holzwerkstoffplatte nach Anspruch 11, **dadurch gekennzeichnet, dass** die mindestens eine Trägerplatte aus einem Holzwerkstoff oder aus Kunststoff oder einem Holzwerkstoff-Kunststoff-Gemisch besteht, und insbesondere eine Span-, mitteldichte Faser(MDF)-, hochdichte Faser (HDF)- oder Grobspan (OSB)- oder Sperrholzplatten, eine Zementfaserplatte und/oder Gipsfaserplatte ist.

**13.** Verwendung einer Holzwerkstoffplatte nach einem der vorhergehenden Ansprüche als ein dekoratives Panel, insbesondere als ein dekoratives Fußbodenpanel oder als dekoratives Wandpanel.

**14.** Verfahren zur Herstellung einer Holzwerkstoffplatte nach einem Ansprüche 1 bis 12 umfassend die folgenden Schritte:
- Kennzeichnen von mindestens einem Muster auf der Oberseite von mindestens einer Werkstoffplatte (1), wobei das mindestens eine Muster mit der Geometrie von mindestens einem in die Werkstoffplatte (1) einzufügenden Element (2) korrespondiert,
- Ausschneiden des mindestens einen **gekennzeichnet**en Musters aus der mindestens einen Werkstoffplatte (1), wobei eine Ausnehmung (3) in der Werkstoffplatte (1) mit der Geometrie des mindestens einen einzufügenden Elementes (2) erhalten wird,
- Einbringen von mindestens einem Klebstoff (4) in die mindestens eine Ausnehmung (3),
- Einbringen von dem mindestens einem Element (2) in die mindestens eine Ausnehmung (3), und
- Aushärten des mindestens einen Klebstoffes (4) zur Befestigung des mindestens einen Elementes (2) in der mindestens einen Ausnehmung (3).

**15.** Verfahren nach Anspruch 14, **dadurch gekennzeichnet, dass** das mindestens eine Muster unter Verwendung einer Bilderkennungssoftware, insbesondere mittels einer Fräse, ausgeschnitten wird.
